# EUROPÄISCHE PATENTANMELDUNG

(11) **EP 2 025 494 A1**
(43) Veröffentlichungstag der Anmeldung: **18.02.2009**
(21) Anmeldenummer: 07015742.5
(22) Anmeldetag: 10.08.2007
(51) Int. Cl.: B29C 47/10, B29C 47/76

(54) **Verfahren und Vorrichtung zur Herstellung eines Verpackungsbandes**

(71) Anmelder: Motech GmbH Technology & Systems, 69518 Ober-Abtsteinach (DE)
(72) Erfinder: Morton-Finger, Jürgen, 69469 Weinheim (DE)
(74) Vertreter: Rohmann, Michael

(57) **Zusammenfassung**

Verfahren sowie Vorrichtung zur Herstellung eines Verpackungsbandes (1) aus Polyethylenterephthalat (PET), wobei vorgetrocknetes PET-Abfallmaterial mit einem Einschneckenextruder (3) extrudiert wird. Während der Extrusion wird ein Unterdruck an den Extruderinnenraum (5) des Einschneckenextruders mit der Maßgabe angelegt, dass niedermolekulare Verunreinigungen aus dem PET-Abfallmaterial entfernt werden. Der schmelzflüssige Kunststoff wird aus einem dem Einschneckenextruder nachgeschalteten Spinnkopf (11) streifenförmig ausgegeben.

## Beschreibung

Die Erfindung betrifft ein Verfahren zur Herstellung eines Verpackungsbandes aus Polyethylenterephthalat (PET). Außerdem betrifft die Erfindung eine Vorrichtung zur Herstellung eines solchen Verpackungsbandes. - Es liegt im Rahmen der Erfindung, dass PET-Abfallmaterial für die Herstellung des Verpackungsbandes eingesetzt wird. Dem PET-Abfallmaterial kann aber jungfräuliches PET als PET-Material zugesetzt werden.

PET-Abfallmaterial meint insbesondere geschredderte PET-Abfälle, vor allem geschredderte gebrauchte PET-Flaschen. Durch dieses Schreddern werden insbesondere so genannte PET-Flakes erzeugt, die im Rahmen der Erfindung bevorzugt eingesetzt werden. - PET-Abfallmaterial ist kostengünstiger als PET-Neuware bzw. PET-Neugranulat. Andererseits zeichnet sich das PET-Abfallmaterial aber auch durch wesentliche Nachteile aus. Das PET-Abfallmaterial hat zunächst einen relativ hohen Verunreinigungsgrad. Fernerhin weist das PET-Abfallmaterial einen verhältnismäßig hohen Feuchtigkeitsgehalt auf. Außerdem liegt das PET-Abfallmaterial in amorpher Form vor.

Aus EP 1 440 783 A1 ist es bekannt, PET-Material, insbesondere PET-Abfallmaterial ohne Vortrocknung und ohne Vorkristallisation einem Doppelschneckenextruder zuzuführen. Der erzeugte schmelzflüssige Kunststoff wird aus einem dem Doppelschneckenextruder nachgeschalteten Spinnkopf streifenförmig ausgegeben. Der abgekühlte und gereckte Kunststoffstreifen wird als Verpackungsband verwendet. Dieses bekannte Verfahren hat sich grundsätzlich bewährt.

Aus der Praxis sind weitere Verfahren zur Verarbeitung von PET-Abfallmaterial bekannt. Nachteilig an diesen Verfahren ist die Tatsache, dass die im PET-Abfallmaterial enthaltenen Verunreinigungen zumindest zu einem großen Teil in das jeweils hergestellte Endprodukt eingebracht werden. Diese Verunreinigungen aus dem PET-Abfallmaterial führen in der Regel zu Qualitätseinbußen der hergestellten PET-Produkte. Bei diesen Verunreinigungen handelt es sich insbesondere um Kleber, chemische Zusätze und dergleichen.

Der Erfindung liegt das technische Problem zugrunde, ein Verfahren der eingangs genannten Art anzugeben, mit dem aus PET-Abfallmaterial ein Verpackungsband hoher Qualität mit optimalen Eigenschaften, insbesondere mit hervorragenden mechanischen Eigenschaften hergestellt werden kann.

Zur Lösung dieses technischen Problems lehrt die Erfindung ein Verfahren zur Herstellung eines Verpackungsbandes aus Polyethylenterephthalat (PET),
wobei vorgetrockenes PET-Abfallmaterial mit einem Einschneckenextruder extrudiert wird,
wobei während der Extrusion ein Unterdruck an den Extruderinnenraum des Einschneckenextruders mit der Maßgabe angelegt wird, dass niedermolekulare Verunreinigungen aus dem PET-Abfallmaterial entfernt werden,
und wobei der schmelzflüssige Kunststoff aus einem dem Einschneckenextruder nachgeschalteten Spinnkopf streifenförmig ausgegeben wird.

Niedermolekulare Verunreinigungen meint im Rahmen der Erfindung insbesondere Substanzen, die aus den Stoffen resultieren, mit denen das PET-Abfallmaterial kontaminiert ist, beispielsweise aus Klebern, chemischen Zusätzen und dergleichen. Niedermolekulare Verunreinigungen meint im Rahmen der Erfindung nicht das in dem vorgetrockneten PET-Abfallmaterial eventuell noch enthaltene restliche Wasser. Bei der Entfernung der niedermolekularen Verunreinigungen mit dem angelegten Unterdruck kann natürlich gegebenenfalls vorhandenes Restwasser mit entfernt werden. Ziel der Erfindung ist es aber, die von Wasser unterschiedlichen niedermolekularen Verunreinigungen aus dem PET-Abfallmaterial zu entfernen.

Dass PET-Abfallmaterial eingesetzt wird bzw. mit dem Einschneckenextruder extrudiert wird, schließt im Rahmen der Erfindung auch Ausführungsformen ein, bei denen dem PET-Abfallmaterial PET-Neuware bzw. PET-Neugranulat zugemischt ist. PET-Abfallmaterial meint im Rahmen der Erfindung, dass das Material aus zumindest 50 Gew.-%, vorzugsweise aus zumindest 75 Gew.-%, bevorzugt aus zumindest 85 Gew.-% und sehr bevorzugt aus zumindest 90 Gew.-% PET-Abfallmaterial bzw. PET-Recyclat besteht. Nach empfohlener Ausführungsform der Erfindung besteht das eingesetzte PET-Material aus mindestens 95 Gew.-% PET-Abfallmaterial oder PET-Abfallmaterial vollständig oder nahezu vollständig aus PET-Abfallmaterial. Es liegt insbesondere im Rahmen der Erfindung, dass das erfindungsgemäß eingesetzte PET-Abfallmaterial von gebrauchten PET-Flaschen stammt. Vorzugsweise werden diese gebrauchten PET-Flaschen geschreddert, so dass so genannte PET-Flakes entstehen, die bei dem erfindungsgemäßen Verfahren bevorzugt verwendet werden. Weiterhin liegt es im Rahmen der Erfindung, dass PET-Abfallmaterial von gebrauchten PET-Folien stammen kann.

Erfindungsgemäß wird vorgetrocknetes PET-Abfallmaterial eingesetzt bzw. dem Einschneckenextruder zugeführt und mit dem Einschneckenextruder extrudiert. Nach bevorzugter Ausführungsform der Erfindung weist das vorgetrockente PET-Abfallmaterial einen Feuchtegehalt bzw. einen Wassergehalt von kleiner 35 ppm, vorzugsweise von kleiner 30 ppm und bevorzugt von kleiner 25 ppm auf. Es liegt im Rahmen der Erfindung, dass der Feuchtegehalt bzw. Wassergehalt des vorgetrockneten PET-Abfallmaterials im Bereich zwischen 10 bis 30 ppm, vorzugsweise im Bereich von 10 bis 25 ppm liegt.

Gemäß einer Ausführungsvariante wird das vorgetrocknete PET-Abfallmaterial dem Einschneckenextruder mit zumindest einer Dosiervorrichtung zugeführt, die beispielsweise als Dosierschnecke ausgebildet ist. Eine solche spezielle Dosiervorrichtung ist im Rahmen der Erfindung aber nicht unbedingt erforderlich. Das PET-Abfallmaterial kann dem Einschneckenextruder auch unmittelbar aus einer Trichteranlage zugeführt werden. Das PET-Abfallmaterial wird dem Einschneckenextruder vorzugsweise in Form von PET-Stücken, bevorzugt in Form von PET-Flakes zugeführt. PET-Stücke meint gemäß einer Ausführungsform auch PET-Granulat.

Es liegt im Rahmen der Erfindung, dass die Erzeugung des Unterdruckes in dem Extruderinnenraum bzw. die Entgasung des Extruderinnenraumes mit Hilfe von zumindest einer an den Extruderinnenraum angeschlossenen Pumpe bzw. Vakuumpumpe durchgeführt wird. Es liegt ferner im Rahmen der Erfindung, dass an den Extruderinnenraum ein Unterdruck von weniger als 10 Millibar, vorzugsweise von weniger als 5 Millibar und bevorzugt von weniger als 3 Millibar angelegt wird. Nach sehr bevorzugter Ausführungsform der Erfindung liegt der an den Extruderinnenraum angelegte Unterdruck im Bereich von 1 bis 10 Millibar, vorzugsweise im Bereich von 1 bis 5 Millibar und sehr bevorzugt im Bereich von 1 bis 3 Millibar.

Zweckmäßigerweise wird der Unterdruck in dem Extruderinnenraum über ein bis drei über die Längserstreckung des Einschneckenextruders verteilte Vakuumdome erzeugt. Nach sehr empfohlener Ausführungsform der Erfindung sind zur Erzeugung des Unterdruckes in dem Extruderinnenraum zumindest zwei über die Längserstreckung des Einschneckenextruders verteilte Vakuumdome vorhanden. Nach einer besonders bevorzugten Ausführungsform der Erfindung erfolgt die Anlegung des Unterdruckes bzw. die Entgasung des Einschneckenextruders zur Entfernung der niedermolekularen Verunreinigungen sowohl in der Agglomeratzone des Extruders als auch in der Aufschmelzzone des Extruders. Agglomeratzone des Extruders meint die Zone, in der die zugeführten PET-Stücke insbesondere PET-Flakes sich zwar bereits zu Agglomeraten verbinden, aber noch nicht vollständig aufgeschmolzen sind. In dieser Agglomeratzone findet insbesondere eine Erweichung bzw. ein Anschmelzen an den Oberflächen der PET-Stücke/PET-Flakes statt, so dass die Agglomeratbildung resultiert. Die Temperatur in der Agglomeratzone des Einschneckenextruders beträgt zweckmäßigerweise 140 bis 160° C, bevorzugt 150° C bzw. etwa 150° C. Die Agglomeratzone liegt bezüglich der Länge des Extruderinnenraumes zumindest teilweise in der ersten Hälfte des Extruderinnenraumes. In der Aufschmelzzone des Einschneckenextruders liegt das PET aufgeschmolzen bzw. im Wesentlichen vollständig aufgeschmolzen vor. Die Aufschmelzzone liegt bezüglich der Länge des Extruderinnenraumes in der zweiten Hälfte des Extruderinnenraumes. Vorzugsweise findet also die Entgasung des Extruderinnenraumes über zumindest einen in der Agglomeratzone des Einschneckenextruders angeordneten Vakuumdom statt sowie über zumindest einen in der Aufschmelzzone des Einschneckenextruders angeordneten Vakuumdom. Zweckmäßigerweise wird an jedem dieser Vakuumdome der oben spezifizierte Unterdruck angelegt.

Es liegt im Rahmen der Erfindung, dass bei der erfindungsgemäßen Entgasung des Extruderinnenraumes zumindest eine niedermolekulare Verunreinigung bzw. Substanz aus der Gruppe "Glykol, 1,2-Ethandiol, Dioxolan, Xylol, Ethanol, Terephthalsäure, Isophthalsäure, Acetaldehyd, 2-Propanol" durch Anlegung des Unterdruckes aus dem Extruderinnenraum entfernt wird. Zweckmäßigerweise wird das Verfahren so geführt, dass zumindest zwei oder drei der vorgenannten Verunreinigungen aus dem Extruderinnenraum entfernt werden. Dioxolan meint im Rahmen der Erfindung insbesonders 2-Methyl-1,3-dioxolan. Xylol meint insbesonders m-Xylol und/oder p-Xylol. Es liegt weiterhin im Rahmen der Erfindung, dass das Verfahren so geführt wird, dass bei der Entgasung des Extruderinnenraumes cyclische Oligomere der Formel (COC₆H₄COOCH₂CH₂)ₓ, entfernt werden, wobei x = 3-13. Vorzugsweise wird von diesen Oligomeren hauptsächlich ein cyclisches Oligomer mit x = 3 entfernt. Niedermolekulare Verunreinigungen meint insbesondere auch niedermolekulare PET-Anteile (Oligomere), die als Reste aus der Abspaltung bei einer Polyesterhydrolyse resultieren.

Nach sehr bevorzugter Ausführungsform der Erfindung ist dem Einschneckenextruder ein Siebfilter nachgeschaltet. Eine besonders empfohlene Ausführungsvariante der Erfindung ist dadurch gekennzeichnet, dass der Schmelzedruck in Förderrichtung vor dem Siebfilter und hinter dem Siebfilter gemessen wird und nach Maßgabe der gemessenen Druckwerte die Drehzahl des Einschneckenextruders und/oder die Dosierung des PET-Abfallmaterials zum Einschneckenextruder variiert wird. Die Dosierung des PET-Abfallmaterials kann beispielsweise durch Einstellung der Drehzahl einer vor den Einschneckenextruder geschalteten Dosierschnecke verändert werden. Die Druckregelung ist vor allem hilfreich beim Spülen des Siebfilters. Zweckmäßigerweise ist ein Rückspülsystem vorgesehen und in Abhängigkeit von der Verschmutzung des Siebfilters wird Schmelze ins Freie abgeführt, um Schmutz aus dem Sieb zu spülen. Bei dem Spülvorgang wird kurzfristig zusätzliches Material vom Einschneckenextruder benötigt. Mit der erfindungsgemäßen Druckregelung kann die Rückspülung auf problemlose Weise durchgeführt werden.

Der aus dem Spinnkopf austretende Kunststoffstreifen hat zweckmäßigerweise eine Streifenbreite von 3 mm bis 50 mm. Es liegt im Rahmen der Erfindung, dass der aus dem Spinnkopf ausgegebene Kunststoffstreifen anschließend abgekühlt und daraufhin gereckt wird. Die Abkühlung des Kunststoffstreifens erfolgt zweckmäßigerweise mit einem fluiden Medium, vorzugsweise in einem Wasserbad. Das Recken des Kunststoffstreifens wird bevorzugt in zumindest einer Reckvorrichtung durchgeführt. Vorzugsweise erfolgt das Recken des Kunststoffstreifens in einer Mehrzahl von Reckvorrichtungen.

Die Erfindung betrifft weiterhin eine Vorrichtung zur Herstellung eines Verpackungsbandes aus Polyethylenterephthalat (PET), wobei eine Trocknungseinrichtung zum Vortrocknen von PET-Abfallmaterial vorgesehen ist, wobei fernerhin ein Einschneckenextruder vorhanden ist, mit dem das vorgetrocknete PET-Abfallmaterial extrudierbar ist, wobei der Einschneckenextruder zumindest einen Vakuumdom zur Erzeugung eines Unterdruckes in dem Extruderinnenraum und zur Entfernung von niedermolekularen Verunreinigungen aus dem PET-Abfallmaterial aufweist und wobei fernerhin ein dem Einschneckenextruder nachgeschalteter Spinnkopf vorhanden ist, aus dem der schmelzflüssige Kunststoff (PET) streifenförmig ausgegeben wird.

Es liegt im Rahmen der Erfindung, dass als Trocknungseinrichtung zumindest ein Kristallisator eingesetzt wird. Im dem Kristallisator findet die Vortrocknung und Vorkristallisation des PET-Abfallmaterials statt.

Der Erfindung liegt die Erkenntnis zugrunde, dass mit dem erfindungsgemäßen Verfahren aus verhältnismäßig kostengünstigem PET-Abfallmaterial ein Verpackungsband hoher Qualität hergestellt werden kann. Der Erfindung liegt vor allem die Erkenntnis zugrunde, dass die in PET-Abfallmaterial enthaltenen Verunreinigungen insbesondere die Qualität eines daraus hergestellten Verpackungsbandes beachtlich beeinträchtigen können. Das gilt in erster Linie für die mechanischen Eigenschaften eines solchen Verpackungsbandes. Mit den erfindungsgemäßen Maßnahmen kann ein Verpackungsband hergestellt werden, das sich durch optimale mechanische Eigenschaften auszeichnet, und zwar insbesondere durch eine hervorragende Festigkeit und durch optimale Dehnungseigenschaften. Im Übrigen kann das Verpackungsband mit dem erfindungsgemäßen Verfahren bzw. mit der erfindungsgemäßen Vorrichtung auf relativ einfache, wenig aufwendige und damit kostengünstige Weise hergestellt werden.

Nachfolgend wird die Erfindung anhand einer lediglich ein Ausführungsbeispiel darstellenden Zeichnung näher erläutert. Es zeigen in schematischer Darstellung:

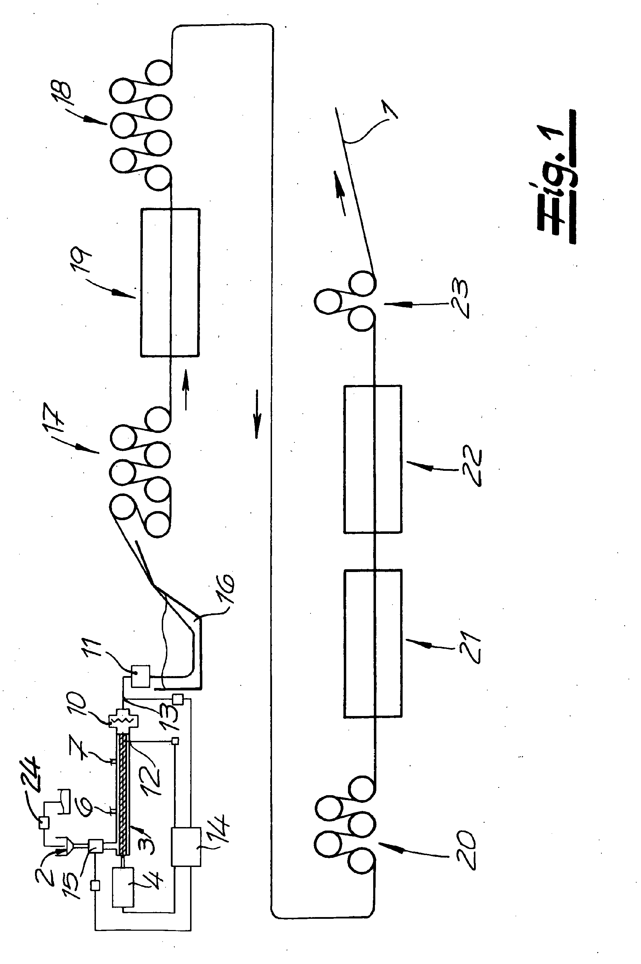

- **Fig.1**: eine Vorrichtung zur Durchführung des erfindungsgemäßen Verfahrens und

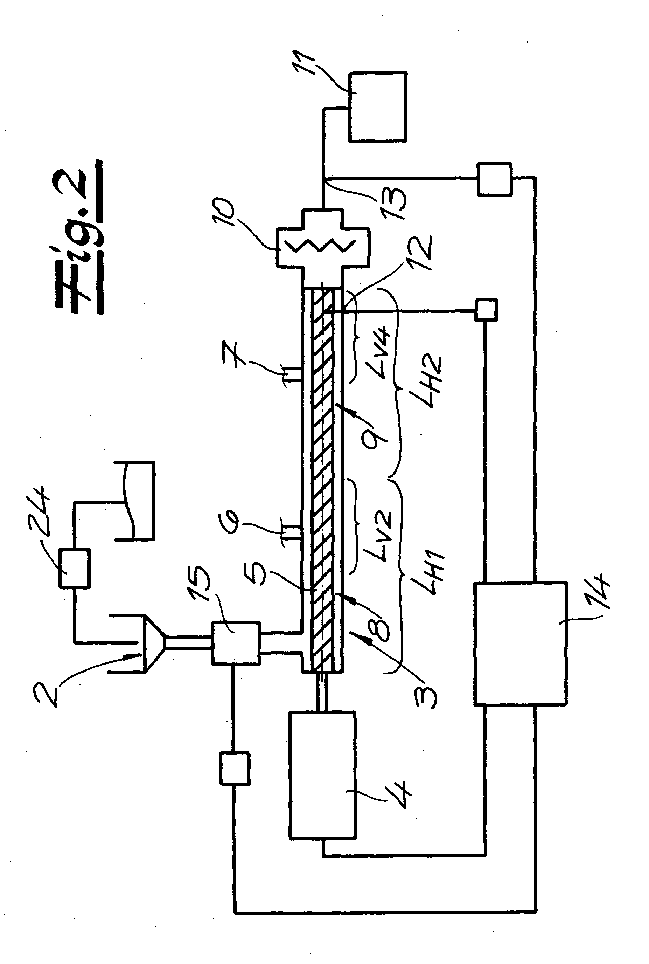

- **Fig. 2**: einen vergrößerten Ausschnitt aus der Fig. 1.

In den Figuren ist eine Vorrichtung zur Herstellung eines Verpackungsbandes 1 aus Polyethylenterephthalat (PET) dargestellt. Erfindungsgemäß wird PET-Abfallmaterial zur Herstellung des Verpackungsbandes eingesetzt. Das PET-Abfallmaterial wird empfohlenermaßen in Form von PET-Flakes 2, die vorzugsweise durch Schreddern von gebrauchten PET-Flaschen erhalten wurden, eingesetzt. Das PET-Abfallmaterial bzw. die PET-Flakes werden zweckmäßigerweise und im Ausführungsbeispiel in einer als Kristallisator ausgebildeten Trocknungseinrichtung 24 vorgetrocknet und vorkristallisiert. Danach werden die vorgetrockneten PET-Stücke bzw. PET-Flakes 2 einem Einschneckenextruder 3 zugeführt, mit dem das PET-Abfallmaterial extrudiert wird. Der Einschneckenextruder 3 wird von einem Extrudermotor 4 angetrieben.

Während der Extrusion des PET-Abfallmaterials wird an den Extruderinnenraum 5 des Einschneckenextruders 3 ein Unterdruck mit der Maßgabe angelegt, dass niedermolekulare Verunreinigungen aus dem PET-Abfallmaterial entfernt werden. Der Unterdruck beträgt dabei vorzugsweise weniger als 10 Millibar absolut, bevorzugt weniger als 5 Millibar absolut und sehr bevorzugt weniger als 3 Millibar absolut. Nach sehr bevorzugter Ausführungsform und im Ausführungsbeispiel wird der Unterdruck in dem Extruderinnenraum über zwei über die Längserstreckung des Einschneckenextruders 3 verteilte Vakuumdome 6, 7 erzeugt. Dabei ist der erste Vakuumdom 6 in der Agglomeratzone 8 des Einschneckenextruders 3 angeordnet, in der die PET-Flakes 2 miteinander agglomerieren, ohne dass eine vollständige Aufschmelzung der PET-Flakes 2 stattfindet. Der zweite Vakuumdom 7 ist in der Aufschmelzzone 9 an den Einschneckenextruder 3 angeschlossen, in der bereits ein vollständiges bzw. zumindest fast vollständiges Aufschmelzen der PET-Flakes 2 erfolgt ist. Der erste Vakuumdom 6 ist im Ausführungsbeispiel in der bezüglich der Länge des Extruderinnenraumes 5 ersten Längshälfte **L_{H1}** des Extruderinnenraumes 5 angeordnet und vorzugsweise im zweiten Längsviertel L_{V2} dieses Extruderinnenraumes 5. Der zweite Vakuumdom 7 ist bezüglich der Länge des Extruderinnenraumes 5 vorzugsweise und im Ausführungsbeispiel in der zweiten Längshälfte L_{H2} des Extruderinnenraumes 5 und bevorzugt im letzten Längsdrittel bzw. im letzten Längsviertel L_{V4} des Extruderinnenraumes 5 angeordnet. An die Vakuumdome 6, 7 ist zweckmäßigerweise zumindest eine in den Figuren nicht dargestellte Vakuumpumpe angeschlossen. Es ist hervorzuheben, dass durch die erfindungsgemäße Entgasung bestimmungsgemäß die Entfernung der niedermolekularen Verunreinigungen aus dem PET-Abfallmaterial durchgeführt wird.

Dem Einschneckenextruder 3 ist ein Siebfilter 10 nachgeschaltet. Hinter dem Siebfilter 10 wird die PET-Schmelze einem Spinnkopf 11 zugeführt, aus dem die PET-Schmelze streifenförmig austritt. Vorzugsweise wird der Schmelzedruck an einer ersten Messstelle 12 vor dem Siebfilter 10 gemessen sowie an einer zweiten Messstelle 13 hinter dem Siebfilter 10. Mit einer Regeleinrichtung 14 kann in Abhängigkeit von den gemessenen Druckwerten die Drehzahl des Einschneckenextruders 3 am Extrudermotor 4 eingestellt werden und/oder die Dosierung des PET-Abfallmaterials durch eine dem Einschneckenextruder 3 vorgeschaltete Dosiereinrichtung 15.

Aus dem Spinnkopf 11 tritt zunächst noch schmelzflüssiges streifenförmiges PET aus, das anschließend gekühlt wird. Hierzu wird der streifenförmige Kunststoff zweckmäßigerweise durch ein Wasserbad 16 geleitet, das vorzugsweise eine Temperatur im Bereich zwischen 30 und 90° C, bevorzugt 40 bis 80° C und sehr bevorzugt von etwa 60° C hat. Danach wird der streifenförmige Kunststoff empfohlenermaßen gereckt und hierzu zunächst durch eine erste Reckvorrichtung 17 geführt. Die Reckvorrichtung 17 kann beispielsweise mit einer Fördergeschwindigkeit von 15 m/min arbeiten. Daraufhin wird der streifenförmige Kunststoff zweckmäßigerweise durch eine zweite Reckvorrichtung 18 geführt, die beispielsweise mit einer Fördergeschwindigkeit von 60 m/min arbeitet. Zwischen den Reckvorrichtungen 17 und 18 wird der Kunststoffstreifen in Längsrichtung bzw. in Förderrichtung gereckt. Danach wird der streifenförmige Kunststoff durch einen Ofen 19 geführt, in dem der Kunststoffstreifen erwärmt wird, und zwar vorzugsweise über die Glastemperatur erwärmt wird. Im Anschluss daran wird der Kunststoffstreifen bevorzugt durch eine dritte Reckvorrichtung 20 geführt, die beispielsweise mit einer Fördergeschwindigkeit von 90 m/min arbeitet. Zwischen den Reckvorrichtungen 18 und 20 wird der Kunststoffstreifen wiederum in Längsrichtung bzw. in Förderrichtung gereckt. Danach wird der Kunststoffstreifen zweckmäßigerweise durch eine Fixierungseinrichtung 21 geführt, in der der Kunststoffstreifen erwärmt wird. Im Anschluss daran findet empfohlenermaßen in einer Abkühlungsvorrichtung 22 eine Abkühlung des Kunststoffstreifens statt. Danach wird der Kunststoffstreifen vorzugsweise durch eine vierte Reckvorrichtung 23 geführt, die beispielsweise mit einer Fördergeschwindigkeit von 85 m/min arbeitet. Dann wird der Kunststoffstreifen bevorzugt in einer nicht dargestellten Wickelvorrichtung aufgewickelt. Der erfindungsgemäß hergestellte Kunststoffstreifen weist insbesondere optimale mechanische Eigenschaften auf und kann als qualitätsmäßig hochwertiges Verpackungsband eingesetzt werden.

## Patentansprüche

1. Verfahren zur Herstellung eines Verpackungsbandes (1) aus Polyethylenterephthalat (PET), wobei vorgetrockenes PET-Abfallmaterial mit einem Einschneckenextruder (3) extrudiert wird,
wobei während der Extrusion ein Unterdruck an den Extruderinnenraum (5) des Einschneckenextruders (3) mit der Maßgabe angelegt wird, dass niedermolekulare Verunreinigungen aus dem PET-Abfallmaterial entfernt werden
und wobei der schmelzflüssige Kunststoff aus einem dem Einschneckenextruder (3) nachgeschalteten Spinnkopf (11) streifenförmig ausgegeben wird.

2. Verfahren nach Anspruch 1, wobei das PET zu zumindest 50 Gew.-%, vorzugsweise zu zumindest 75 Gew.-% und bevorzugt zu zumindest 85 Gew.-% aus PET-Abfallmaterial besteht.

3. Verfahren nach einem der Ansprüche 1 oder 2, wobei das vorgetrocknete PET-Abfallmaterial einen Feuchtegehalt von kleiner 30 ppm, vorzugsweise kleiner 25 ppm aufweist.

4. Verfahren nach einem der Ansprüche 1 bis 3, wobei an den Extruderinnenraum (5) ein Unterdruck von weniger als 10 Millibar, vorzugsweise von weniger als 5 Millibar und bevorzugt von weniger als 3 Millibar angelegt wird.

5. Verfahren nach einem der Ansprüche 1 bis 4, wobei der Unterdruck in dem Extruderinnenraum (5) über zumindest zwei über die Längserstreckung des Einschneckenextruders (3) verteilte Vakuumdome (6, 7) erzeugt wird.

6. Verfahren nach Anspruch 5, wobei die Anlegung des Unterdruckes bzw. die Entgasung zur Entfernung der niedermolekularen Verunreinigungen sowohl in der Agglomeratzone (8) des Einschneckenextruders (3) als auch in der Aufschmelzzone (9) des Einschneckenextruders (3) durchgeführt wird.

7. Verfahren nach einem der Ansprüche 1 bis 6, wobei zumindest eine niedermolekulare Substanz bzw. Verunreinigung aus der Gruppe " Glykol, 1,2-Ethandiol, Dioxolan, Xylol, Ethanol, Terephthalsäure, Isophthalsäure, Acetaldehyd, 2-Propanol" durch Anlegen des Unterdruckes bzw. durch die Entgasung aus dem Extruderinnenraum (5) entfernt wird.

8. Verfahren nach einem der Ansprüche 1 bis 7, wobei der aus dem Spinnkopf (11) ausgegebene Kunststoffstreifen anschließend abgekühlt und gereckt wird.

9. Vorrichtung zur Herstellung eines Verpackungsbandes (1) aus Polyethylenterephthalat (PET),
wobei eine Trocknungseinrichtung (24) zum Vortrocknen von PET-Abfallmaterial vorgesehen ist,
wobei fernerhin ein Einschneckenextruder (3) vorhanden ist, mit dem das vorgetrocknete PET-Abfallmaterial extrudierbar ist,
wobei der Einschneckenextruder (3) zumindest einen Vakuumdom (6, 7) zur Erzeugung eines Unterdruckes in dem Extruderinnenraum (5) des Einschneckenextruders (3) und zur Entfernung von niedermolekularen Verunreinigungen aus dem PET-Abfallmaterial aufweist
und wobei fernerhin dem Einschneckenextruder (3) ein Spinnkopf (11) nachgeschaltet ist, aus dem der Kunststoff streifenförmig ausgegeben wird.

10. Vorrichtung nach Anspruch 9, wobei die Unterdruckanlegung bzw. die Entgasung über zumindest einen in der Agglomeratzone (8) des Einschneckenextruders (3) angeordneten Vakuumdom (6) durchgeführt wird sowie über zumindest einen in der Aufschmelzzone (9) des Einschneckenextruders (3) angeordneten Vakuumdom (7) durchgeführt wird.
